# FASCICULE DE BREVET EUROPEEN

(11) **EP 3 221 114 B1**
(45) Date de publication et mention de la délivrance du brevet: **31.07.2019**
(21) Numéro de dépôt: 15805605.1
(22) Date de dépôt: 20.11.2015
(51) Int. Cl.: B29C 45/27

(54) **PROCEDE DE FABRICATION D'UNE PIECE DE VÉHICULE EN MATERIAU POLYMERE**
VERFAHREN ZUR HERSTELLUNG EINES FAHRZEUGTEILS AUS EINEM KUNSTSTOFFMATERIAL
METHOD FOR PRODUCING A VEHICLE PART OF A POLYMER MATERIAL

(30) Priorité: 21.11.2014 FR 1461304
(43) Date de publication de la demande: 27.09.2017
(73) Titulaire: Compagnie Plastic Omnium, 69007 Lyon (FR)
(72) Inventeur: DEMANGE, Jean-Yves, 01500 Amberieu En Bugey (FR); TRESSE, David, 01390 Saint-André de Corcy (FR); BRIZIN, Jérôme, 01100 Arbent (FR)
(74) Mandataire: Andrieux, Benoît
(86) Numéro de dépôt international: PCT/FR2015/053155
(87) Numéro de publication internationale: WO 2016/079450

(56) Documents cités:
- EP-A2- 2 279 844
- WO-A2-2006/050230
- DE-A1-102010 017 254
- JP-A- S55 133 942
- JP-A- 2003 305 753
- US-A- 5 334 340
- US-A- 5 967 637
- US-A1- 2001 007 513

## Description

La présente invention concerne des pièces en thermoplastique de type polypropylène chargé ou non chargé. Elle s'applique en particulier aux pièces présentant des faces visibles après assemblage sur un véhicule.

Dans un procédé classique de moulage, la matière n'est pas injectée directement dans l'empreinte mais passe préalablement par un canal qui constitue une striction par rapport au moule, du fait que son épaisseur est plus petite que celle du moule. Les canaux de grande largeur forment des « nappes » et les canaux de petite largeur forment des « seuils ».

De façon générale, des défauts d'aspect sont rencontrés sur les 30 premiers millimètres (défauts dégressifs) d'écoulement de matière dans l'empreinte. Le principal défaut rencontré est le point chaud lié au cisaillement et à la perturbation de début de remplissage en aval de la striction, engendrant une retassure importante et pouvant occasionner le rebut de la pièce.

De ce fait, les faces de la pièce où a été effectuée l'injection présentent un défaut qui les rend inacceptables comme faces visibles. On entend par face visible d'une pièce une face qui est vue par un observateur de taille adulte se tenant debout à côté du véhicule et qui répond aux exigences d'aspect fixées dans le domaine automobile. Même si ces exigences peuvent varier d'un constructeur à un autre, tous s'entendent sur le fait qu'une face visible d'une pièce doit présenter le minimum de défauts détectables à l'oeil nu.

Il y a donc un besoin en pièces dont certaines faces doivent pouvoir être visibles.

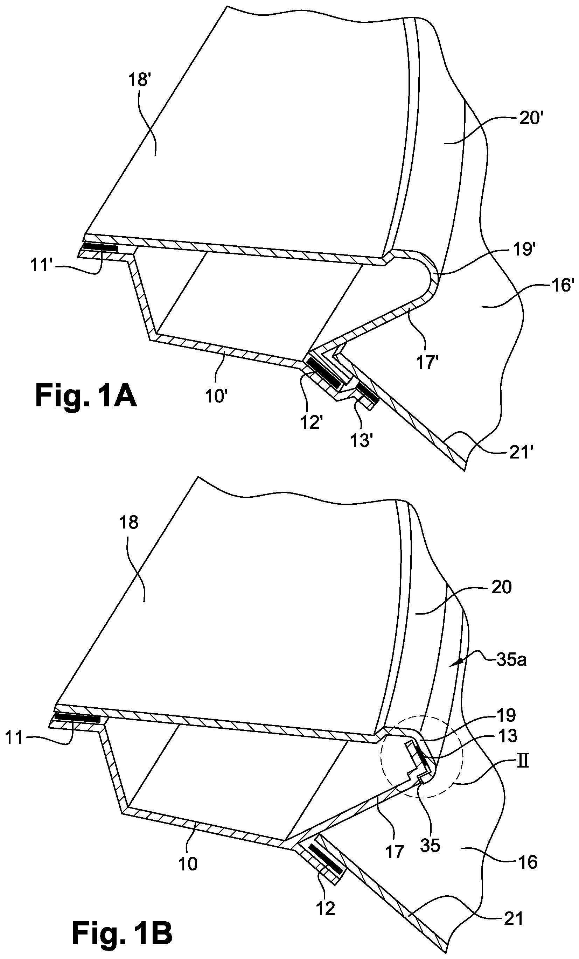

Dans le domaine de l'automobile, c'est par exemple le cas de la zone supérieure du becquet (sans retour inférieur formant une casquette intégrée) qui est représenté en figure 1B. Habituellement les becquets ont une portion en forme de U, comme représenté en figure 1A, avec un retour inférieur long qui peut aller jusqu'à 100 mm. En revanche, les becquets tels que représentés en figure 1B ont le retour inférieur uniquement sur quelques millimètres (3 à 10 mm).

On connaît déjà un matériau qui permet de fournir des pièces ne présentant pas de tels défauts d'aspect. Il s'agit de l'ABS/PC (acrylonitrile, butadiène styrène / polycarbonate). Ce matériau est cependant caractérisé par le fait qu'il se dilate beaucoup. Il requiert également un traitement spécifique (opération de flammage) avant collage et nécessite un primaire spécifique pour la peinture. Enfin, il s'agit d'un matériau onéreux. Document EP 2 279 844 A1 divulgue un Procédé de fabrication d'une pièce de véhicule en matériau polymère.

L'invention a notamment pour but de fournir une pièce dont certaines faces peuvent être visibles.

A cet effet, l'invention a pour objet un procédé d'obtention d'une pièce de véhicule automobile ayant au moins une face visible s'étendant jusqu'à une portion d'un bord de la pièce, la pièce étant formée par une peau d'un matériau polymère dont l'épaisseur est significativement plus petite que les autres dimensions de la peau, procédé caractérisé en ce qu'il comporte au moins les étapes suivantes :
- injection du matériau polymère dans un moule comprenant une empreinte en au moins deux parties contigües, à savoir une partie principale destinée à former la pièce et au moins une partie supplémentaire destinée à former un supplément de pièce, la partie supplémentaire s'étendant sur une longueur allant de 10 à 30 mm, de préférence de 20 à 28 mm, et idéalement de 20 à 25 mm, l'épaisseur de chaque partie supplémentaire à la jonction avec la partie principale étant au maximum égale à l'épaisseur à la jonction de la partie principale et au minimum égale à l'épaisseur à la jonction de la partie principale diminuée de 0,5 mm, chaque partie supplémentaire étant située entre un point d'entrée du matériau polymère dans l'empreinte et la partie principale, et
- séparation de la pièce et du supplément de pièce par découpe pour former ladite portion d'un bord de la pièce.

On entend ici par « longueur » d'un objet moulé dans une empreinte, une mesure effectuée sur cet objet dans le sens d'écoulement du matériau dans l'empreinte. Ainsi, la longueur du supplément de pièce est la mesure prise en suivant la courbure, le cas échéant, du supplément de pièce, dans le sens de remplissage de la partie supplémentaire de l'empreinte. De même, la longueur de la pièce est la mesure prise en suivant, le cas échéant, la courbure de la pièce dans le sens de remplissage de la partie principale de l'empreinte. La largeur est une mesure prise perpendiculairement à la longueur.

On entend ici par « portion d'un bord de la pièce» la portion de son contour obtenue par découpe.

L'invention sera avantageusement appliquée à des pièces présentant une largeur de 500 à 1000 mm, préférentiellement de 200 à 400 mm, une longueur de 1000 à 1500 mm et une épaisseur de 2 à 5 mm, l'épaisseur étant préférentiellement comprise entre 3 à 3,5 mm. Avantageusement, ces pièces ont une largeur égale au tiers de la longueur. La largeur du supplément de pièce peut varier entre 45 mm et toute la largeur de la pièce.

Les suppléments de pièce sont en fait des allongements locaux, également désignés « extensions », de la pièce thermoplastique injectés en bord de pièce. Ces suppléments de pièce sont destinés à recevoir les défauts habituels rencontrés sur les premiers millimètres d'écoulement de matériau polymère dans l'empreinte.

Ces suppléments de pièce sont destinés à être séparés de la pièce.

Cependant, avant séparation, ces suppléments de pièce pourraient avantageusement être utilisés pour accrocher la pièce, par exemple pendant son acheminement dans la chaîne de peinture.

Après séparation, le matériau polymère contenu dans le supplément de pièce est avantageusement réutilisé pour la fabrication de nouvelles pièces.

De façon avantageuse, la découpe est effectuée avec une tolérance de position par rapport à la jonction inférieure à 0,5 mm et la découpe obtenue est sans bourrelet et sans aspérité.

De façon préférentielle, la portion de bord est visible.

La qualité de la découpe permet d'atteindre le niveau de qualité attendu dans le domaine de l'automobile, c'est-à-dire une découpe franche, sans bourrelet et sans aspérité.

Le procédé d'obtention de pièce comprend les étapes suivantes :
- création d'une amorce de rupture à la jonction entre la pièce et le supplément de pièce et abaissement de la température de la jonction jusqu'à une température inférieure ou égale au point de fragilisation du matériau polymère, puis
- une fois que la jonction entre la pièce et le supplément de pièce présente une température inférieure ou égale au point de fragilisation du matériau polymère, rupture mécanique à la jonction.

On entend par « amorce de rupture » une zone de résistance moindre dont la présence fragilise localement l'ensemble de la pièce et du supplément de pièce, ce qui facilite la découpe. L'amorce de rupture peut correspondre à une épaisseur moindre par rapport à l'épaisseur de la pièce. Elle peut également correspondre à une zone percée par endroits.

Ces étapes du procédé consistent à abaisser la température au niveau de l'amorce de rupture jusqu'à une température de fragilisation (point de fragilisation) du matériau thermoplastique. Un effort est alors appliqué pour solliciter l'amorce de rupture. La combinaison de cet effort et de l'abaissement de température jusqu'au point de fragilisation engendre la rupture de la jonction et la séparation de la pièce et du supplément de pièce.

Ces étapes du procédé présentent une bonne tolérance de position par rapport à la jonction (inférieure à 0,5 mm) et permettent d'obtenir une pièce avec un aspect net au niveau de l'arête visible découpée. La découpe obtenue est donc précise. Elle peut être effectuée avant ou après peinture. Ces étapes du procédé ne sont pas associées à une émission de copeaux, de matières brûlées ou de cendres. Ces étapes du procédé peuvent être utilisées pour des suppléments de pièce de 500 mm à 1000 mm de largeur. Ce système de découpe peut donc être envisagé pour des pièces présentant une grande largeur.

L'abaissement de température de la jonction entre la pièce et le supplément de pièce peut être obtenu en plaçant l'ensemble de la pièce et du supplément de pièce dans une enceinte fermée contenant une atmosphère de conditionnement à une température inférieure ou égale au point de fragilisation du matériau polymère. L'ensemble peut être également placé dans un tunnel de refroidissement acceptant le passage de la pièce sur un convoyeur d'une chaîne de fabrication de la pièce.

L'abaissement de température de la jonction entre la pièce et le supplément de pièce peut également être obtenu par immersion de la jonction dans un bain d'azote liquide, ou par aspersion (projection de cristaux de dioxyde de carbone ou d'azote liquide).

La rupture mécanique peut être effectuée en soumettant le supplément de pièce à un effort continu à l'aide d'un vérin hydraulique ou d'un préhenseur ou à un effort brutal par chute de masse. L'intervention d'un opérateur peut être envisagée.

Dans le procédé selon ce mode de réalisation de l'invention, la phase de création d'une amorce de rupture peut indifféremment précéder ou succéder la phase d'abaissement de la température.

De façon avantageuse, le refroidissement est réalisé uniquement sur la jonction, sur un ensemble d'une pièce et d'un supplément de pièce dans lequel la pièce est encore chaude (10 à 50 °C). Ceci garantit que seule la jonction va céder.

De façon optionnelle, le supplément de pièce est également soumis à une température inférieure ou égale au point de fragilisation du matériau polymère.

Ce procédé pourrait également être mis en oeuvre pour du décarottage (également désigné écarottage).

L'étape de création d'une amorce de rupture à la jonction entre la pièce et le supplément de pièce consiste à former un angle vif à la surface de la jonction.

On entend par « angle vif » une arête ou un sillon dont la section transversale présente un sommet ayant un rayon de courbure inférieur à 0,5 mm, idéalement inférieur à 0,05 mm.

Ainsi, l'angle vif est formé par réalisation, à la jonction entre la pièce et le supplément de pièce, d'un sillon au moyen d'une lame après éjection de la pièce et du supplément de pièce hors du moule. L'angle vif est alors l'angle au fond du sillon.

Avantageusement, le sillon présente une profondeur comprise entre 0,2 et 0,3 mm.

L'angle vif peut aussi être formé lors de l'étape d'injection, par utilisation d'une empreinte dans laquelle l'épaisseur à la jonction de la partie supplémentaire est inférieure, de préférence de 0,5 mm, à l'épaisseur à la jonction de la partie principale, en formant une marche à la jonction entre la pièce et le supplément de pièce.

Préférentiellement, la découpe est effectuée avec une tolérance de position par rapport à la jonction inférieure ou égale à 0,1 mm et la découpe obtenue est sans bourrelet et sans aspérité.

De façon également avantageuse, la découpe est effectuée à l'aide d'une lame mobile en translation dans une direction de coupe, qui présente une extrémité tranchante au moins partiellement inclinée, c'est-à-dire non perpendiculaire à la direction de coupe et qui est agencée pour séparer l'ensemble de la pièce et du supplément de pièce le long de la jonction entre celles-ci, sous l'effet d'une pression exercée de haut en bas.

L'inclinaison de l'extrémité tranchante de la lame permet que toute la force exercée sur la lame soit concentrée sur une ligne de contact réduite, ce qui augmente l'efficacité de la découpe. La forme spécifique de la lame de coupe permet, tout au long de la descente, un guidage en contact sur la pièce à couper.

Ce procédé de découpe est simple et permet d'obtenir une pièce avec un aspect net au niveau de l'arête visible découpée. Il peut être utilisé pour des suppléments de pièce de 500 mm à 1000 mm de largeur. Ce système de découpe peut donc être envisagé pour des pièces présentant une grande largeur. Il présente de plus une tolérance de position par rapport à la jonction de 0,1mm maximum. Ce système permet d'indexer la pièce à découper localement pour la découpe. La pièce peut protéger l'opérateur de la zone de découpe, ce qui permet de simplifier les systèmes de sécurité. De plus, ce procédé nécessite un dispositif spécifique mais peu coûteux. Ce procédé est également caractérisé par un temps de cycle très faible qui suit parfaitement une cadence d'injection. Enfin, cette découpe peut être effectuée avant ou après peinture et ces étapes du procédé ne sont pas associées à une émission de copeaux, de matières brûlées ou de cendres.

De façon avantageuse, l'extrémité tranchante au moins partiellement inclinée, est constituée de trois segments, à savoir un segment central et deux segments latéraux qui coupent chacun un bord de la lame et chacun des segments latéraux forme un angle aigu avec la direction de coupe.

Avantageusement, les segments latéraux sont symétriques.

Dans un mode de mise en oeuvre avantageux, le système peut fonctionner en automatique.

Ce procédé peut également être mis en oeuvre pour du décarottage.

Ces techniques de découpe sont préférées à d'autres techniques qui présentent les inconvénients présentés ci-après.

Ainsi, avec les techniques mécaniques de découpe (pinces coupantes, couteaux tirés, tranchage par ultrasons), l'effort fait fluer le plastique, ce qui génère un petit bourrelet le long de la découpe. De plus, la tolérance de découpe est au mieux de 0,5 mm pour un couteau tiré. Elle est supérieure à 0,5 mm pour des pinces coupantes. Le système de découpe par couteau tiré est de plus mal adapté pour suivre une découpe galbée. Egalement, les techniques de découpe par pinces coupantes ou couteaux tirés ne sont pas compatibles avec une découpe de supplément de pièce au-delà de 200 mm de largeur. Ainsi, l'aspect des pièces et la précision de la découpe ne sont pas conformes au but de l'invention.

En ce qui concerne la découpe par jet d'eau haute pression, celle-ci crée une découpe avec des aspérités. De plus, en cas de découpe de sections fermées, elle nécessite l'utilisation d'un bouclier de protection (pièce martyre).

La découpe par faisceau laser pourrait être envisagée, tant en termes d'aspect (qualité de l'arête découpée) qu'en terme de précision de la découpe. Cependant elle constitue une solution onéreuse. En effet, le nettoyage des pièces est obligatoire après la découpe et peut polluer s'il reste des résidus d'un traitement par peinture. De plus, dans le cas de sections fermées, une distance minimale, voire l'utilisation d'un bouclier thermique d'absorption du faisceau, en cuivre ou argent, ou d'un bouclier de protection (pièce martyre), est nécessaire de façon à ne pas couper la seconde surface située en vis-à-vis de la découpe, sur le point de sortie du laser.

L'invention a également pour objet un procédé d'obtention d'un ensemble d'une pièce de véhicule automobile et d'un cadre porteur de la pièce, la pièce ayant au moins une face visible s'étendant jusqu'à un bord de la pièce, le procédé étant caractérisé en ce qu'il comprend les étapes du procédé d'obtention d'une pièce de véhicule automobile tel que décrit ci-dessus, et en outre une étape d'assemblage de la peau sur le cadre porteur de la pièce.

Dans l'ensemble obtenu par le procédé selon l'invention, la pièce présente au moins une face visible après montage de l'ensemble sur le véhicule.

De façon préférentielle, la pièce et le cadre sont assemblés par collage.

L'ensemble obtenu par le procédé est de façon avantageuse un ensemble d'un cadre porteur et d'une pièce de carrosserie extérieure.

Préférentiellement, la pièce de carrosserie extérieure est un becquet arrière.

L'invention sera mieux comprise à la lecture des figures annexées, qui sont fournies à titre d'exemples et ne présentent aucun caractère limitatif, dans lesquelles :
La figure 1A représente une pièce qui forme l'intégralité d'un becquet à portion en U selon l'état de la technique.
La figure 1B représente une pièce qui forme la partie supérieure du même becquet.
La figure 2 est une vue en coupe d'une portion d'un moule selon l'état de la technique, dans la région II de la pièce représentée en figure 1B.
La figure 3 est une vue en coupe d'une portion d'un moule selon l'invention pour la même région II de la pièce représentée en figure 1B.
La figure 4 est une représentation à plat d'une partie IV d'une peau de matériau polymère selon l'invention, après moulage par injection dans le moule représenté sur la figure 3 et éjection.
La figure 5 rassemble des vues en coupe selon V - V de la peau de matériau polymère de la figure 4, à différentes phases de l'étape de découpe selon un mode de mise en oeuvre de l'invention.
La figure 6 rassemble des vues en coupe similaires à celles de la figure 5, à différentes phases de l'étape de découpe selon un mode de mise en oeuvre de l'invention.
La figure 7 représente une peau de matériau polymère à différentes phases de l'étape de découpe selon un mode de mise en oeuvre de l'invention.
La figure 8 est une vue en perspective d'une lame et d'une peau de matériau polymère, selon un mode de réalisation de l'invention.
La figure 9 montre une vue de dessus d'une lame selon un mode de réalisation de l'invention.

On se réfère maintenant à la figure 1A, sur laquelle est représentée une pièce 20' qui forme l'intégralité d'un becquet selon l'état de la technique. La pièce 20' comprend une portion supérieure 18' et une portion en U 19' à laquelle est intégrée une casquette 17'. La pièce 20' est montée sur un cadre d'ouvrant 10' à l'aide d'un joint de colle 11' qui fixe la portion 18' de la pièce 20' au cadre d'ouvrant 10' et d'un joint de colle 12' qui fixe la portion en U 19' au cadre d'ouvrant 10'. L'ensemble est assemblé avec la vitre dont une partie 16' est représentée. Plus précisément, la partie 21' de la vitre 16' est fixée à la casquette 17' par un joint de colle 13'.

On a représenté en figure 1B une pièce 20 qui forme la partie supérieure d'un becquet présentant une forme générale identique. La pièce 20 comprend une portion incurvée 19 et une portion supérieure 18. Elle est montée sur un cadre d'ouvrant 10 qui intègre une casquette 17. La pièce 20 est montée sur le cadre d'ouvrant 10 à l'aide d'un joint de colle 11 qui fixe la portion 18 de la pièce 20 au cadre d'ouvrant 10 et d'un joint de colle 13 qui fixe la casquette 17 du cadre d'ouvrant 10 à la portion incurvée 19 de la pièce 20. L'ensemble est assemblé avec la vitre dont une partie 16' est représentée, à l'aide d'un joint de colle 12 qui fixe un montant 21 de la vitre au cadre d'ouvrant 10.

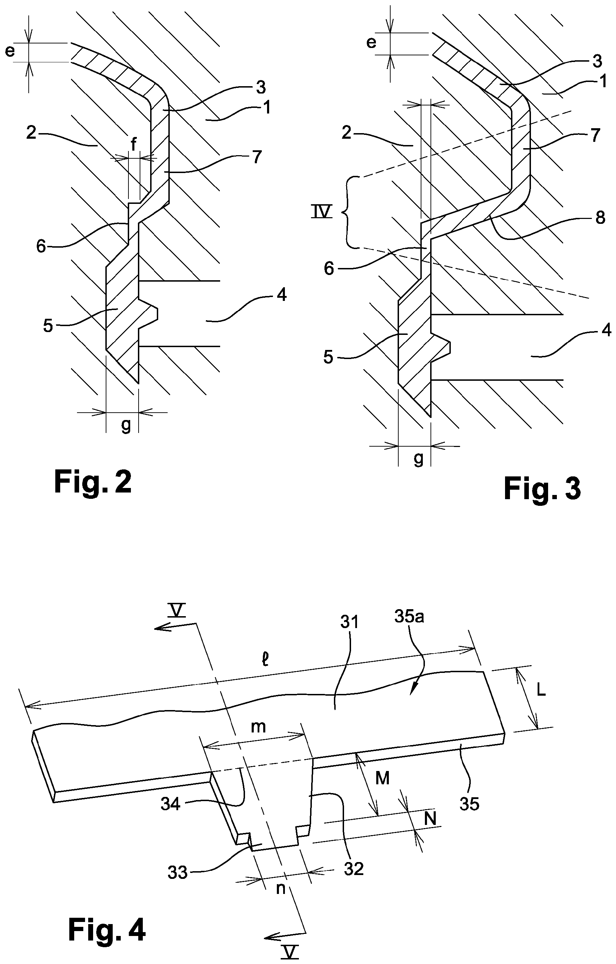

Dans les figures 2 et 3, les composants qui sont identiques sont désignés par les mêmes numéros de référence.

On a représenté en figure 2 une coupe d'une portion d'un moule selon l'état de la technique pour la portion II de la pièce 20 de la figure 1B, le moule étant composé d'une matrice et d'un poinçon. L'empreinte 3 du moule est destinée à recevoir la peau de matériau polymère qui provient de la buse d'injection 4 et qui formera la pièce. L'empreinte représentée sur la figure comporte plusieurs parties. La partie principale 7 est destinée à former la pièce. Elle présente une épaisseur e. Elle est contigüe à un canal 6 qui constitue une striction et qui a une épaisseur f inférieure à l'épaisseur e de la partie principale 7. Le réservoir 5 est la partie qui reçoit le matériau polymère qui provient de la buse d'injection 4. Le réservoir 5 présente une grande épaisseur g et le matériau polymère y est homogénéisé.

On a représenté en figure 3 une coupe d'une portion d'un moule selon l'invention pour la portion 22 de la pièce 20 de la figure 1B. Dans ce moule, l'empreinte comporte une partie supplémentaire 8, contigüe à la partie principale 7 et destinée à former un supplément de pièce. La partie supplémentaire 8 présente la même épaisseur e à la jonction entre la partie principale 7 et la partie supplémentaire 8. La partie supplémentaire 8 est située entre le point d'entrée du matériau polymère dans l'empreinte ou point d'injection, matérialisé par l'extrémité de la buse 4 et la partie principale 7.

Dans les figures 4 à 6, les composants qui sont identiques sont désignés par les mêmes numéros de référence.

On a représenté en figure 4 une mise à plat de la partie IV de la peau de matériau polymère, après moulage par injection dans le moule représenté sur la figure 3 et éjection. La mise à plat permet de mieux distinguer les morceaux de la peau, qui apparaissent ici en deux dimensions, alors qu'ils forment en réalité des angles entre eux, comme on le voit en figure 3. Après injection dans le moule, le matériau polymère est compacté puis éjecté selon des techniques classiques non décrites ici. La peau de matériau polymère a formé, dans la partie principale 7 de l'empreinte, la pièce 31. Elle a formé dans la partie supplémentaire 8 de l'empreinte, le supplément de pièce 32 qui lui est contigu. Enfin, elle a formé, dans la striction 6 de l'empreinte, une striction de grande largeur 33 ou nappe. La pièce 31 présente une largeur I supérieure à celle m du supplément de pièce 32, elle-même sensiblement identique à la largeur n de la nappe 33. La pièce 31 présente une longueur L. Le supplément de pièce 32 présente une longueur M et la nappe 33 présente une longueur N. La peau de matériau polymère peut, selon d'autres modes de mise en oeuvre de l'invention, comprendre plusieurs suppléments de pièce, chacun associé ou non à une striction telle qu'une nappe ou un seuil. La peau de matériau polymère peut ne pas comprendre de striction. La ligne 34 représente la jonction entre la pièce 31 et le supplément de pièce 32. Selon l'invention, la séparation de la pièce et du supplément de pièce par découpe doit être effectuée selon cette ligne pour former une portion d'un bord 35, visible en figure 1B, de la pièce 31. Au moins une face 35a de la pièce s'étendant jusqu'au bord 35 de la pièce est visible.

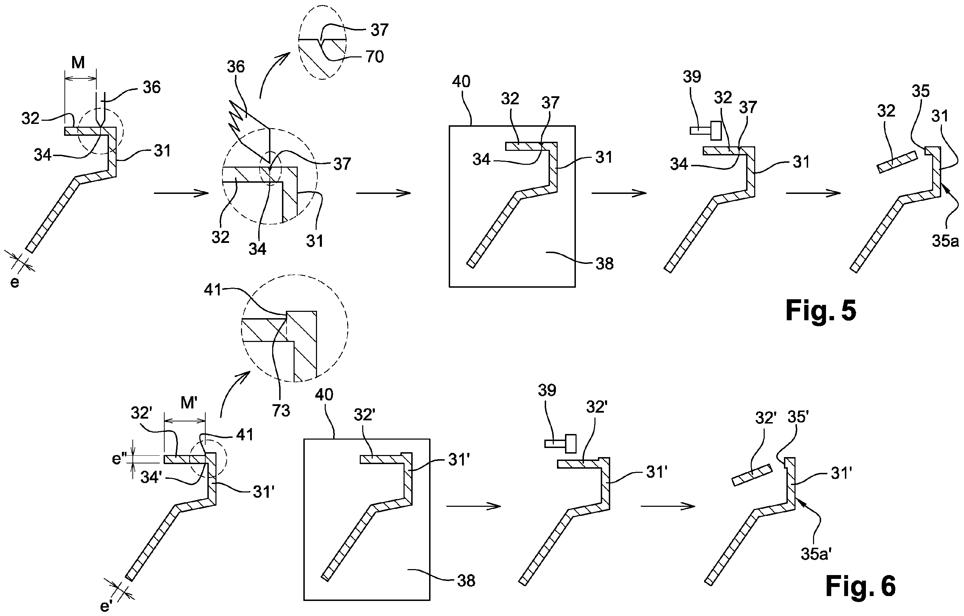

La figure 5 réunit des vues en coupe de la peau de matériau polymère de la figure 4, à différentes phases de l'étape de découpe selon un mode de mise en oeuvre de l'invention. Dans un but de simplification, les angles de la figure 3 n'ont pas été respectés.

La pièce 31 et le supplément de pièce 32, en polypropylène, ont une épaisseur e. La longueur M du supplément de pièce est de 20 mm. Une lame 36 de cutter est appliquée sur la jonction 34 entre la pièce 31 et le supplément de pièce 32 de manière à réaliser un sillon 37, ce qui forme à la jonction l'angle vif 70, qui se trouve en fond de sillon, créant ainsi une amorce de rupture. L'ensemble formé par la pièce 31 et le supplément de pièce 32 est ensuite introduit dans une enceinte fermée 40 contenant une atmosphère 38 de conditionnement à -22 °C à la presson atmosphérique, afin d'abaisser la température de la jonction jusqu'à une température inférieure ou égale au point de fragilisation du matériau polymère. L'ensemble y est maintenu pendant 24 heures. La jonction 34 présente alors une température inférieure ou égale au point de fragilisation du matériau polymère, et le supplément de pièce 32 est percuté par une masse 39, entraînant ainsi une rupture mécanique à la jonction 34 entre la pièce 31 et le supplément de pièce 32, ce qui permet la séparation de la pièce 31 et du supplément de pièce 32. La séparation permet de former une portion du bord 35 de la pièce. On entend par « masse » un impacteur ou marteau pouvant être guidé de manière à taper ou appuyer au bon endroit. La découpe obtenue est franche, sans bourrelet et sans aspérité. Au moins la face 35a de la pièce s'étendant jusqu'au bord 35 de la pièce est visible.

La figure 6 montre des vues en coupe d'une peau de matériau polymère similaire à celle de la figure 4, à différentes phases de l'étape de découpe selon un mode de mise en oeuvre de l'invention.

Une pièce 31' et un supplément de pièce 32' sont représentés. L'épaisseur e" de la partie supplémentaire à la jonction 34' entre la pièce 31' et le supplément de pièce 32' est inférieure à l'épaisseur e' de la partie principale 31' à la jonction. Cette différence d'épaisseur crée une marche 41. La différence d'épaisseur s'étend sur toute la longueur M' du supplément de pièce 32'. La marche 41 présente un angle vif 73. L'angle vif 73 a été formé lors de l'étape d'injection, par utilisation d'une empreinte non représentée dans laquelle l'épaisseur à la jonction de la partie supplémentaire est inférieure à l'épaisseur à la jonction de la partie principale.

La formation de l'angle vif 73 crée une amorce de rupture à la jonction entre la pièce 31' et le supplément de pièce 32'. L'ensemble formé par la pièce 31' et le supplément de pièce 32' est ensuite introduit dans l'enceinte fermée 40 contenant l'atmosphère 38 de conditionnement. L'ensemble y est maintenu pendant 24 heures, de manière à abaisser la température de la jonction 34' jusqu'à une température inférieure ou égale au point de fragilisation du matériau polymère. Par la suite, alors que la jonction présente une température inférieure ou égale au point de fragilisation du matériau polymère, le supplément de pièce 32' est percuté par la masse 39, ce qui entraîne une rupture mécanique entre la pièce 31' et le supplément de pièce 32'. Ceci permet la séparation de la pièce 31' et du supplément de pièce 32'. La séparation permet de former une portion d'un bord 35' de la pièce 31'. La découpe obtenue est franche, sans bourrelet et sans aspérité. Au moins une face 35a' de la pièce s'étendant jusqu'au bord 35' de la pièce est visible.

L'enceinte peut être à une température plus basse pour limiter le temps nécessaire à ce que la jonction atteigne une température inférieure ou égale au point de fragilisation du matériau polymère.

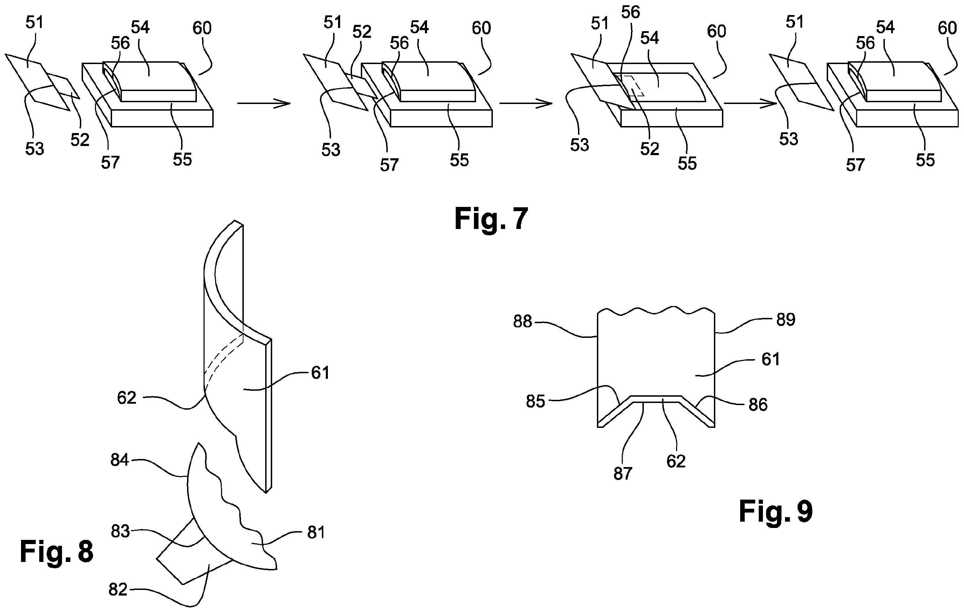

La figure 7 représente une peau de matériau polymère similaire à celle de la figure 4, à différentes phases de l'étape de découpe selon un mode de mise en oeuvre de l'invention.

Une pièce 51 et un supplément de pièce 52 sont représentés. La ligne 53 représente la jonction entre la pièce 51 et le supplément de pièce 52. Un dispositif 60 de découpe est représenté. Celui-ci comporte une embase 55 comportant un évidement 57. L'embase est surmontée d'une arche 54 mobile qui comprend une partie porte-lame 56, ou poinçon, équipée d'une lame non représentée. Pour séparer la pièce 51 du supplément de pièce 52, l'ensemble est positionné de sorte que la ligne de jonction 53 est placée au droit de la partie porte-lame 56 de l'arche 54, ce qui positionne le supplément de pièce 52 dans l'évidement 57 de l'embase 55. La pièce 51 est séparée du supplément de pièce 52 en exerçant une pression de haut en bas sur l'arche 54 pour la déplacer vers le bas, de manière à trancher la ligne de jonction 53 à l'aide de la lame portée par le porte-lame 56, entraînant la séparation de la pièce 51 et du supplément de pièce 52 par découpe. La séparation permet de former un bord de la pièce 51. Le supplément de pièce demeure au droit de l'évidement 57 où il peut être collecté, par exemple par un plateau prévu à cet effet. Au moins une face de la pièce s'étendant jusqu'au bord de la pièce est visible.

Dans les figures 8 et 9, les composants qui sont identiques sont désignés par les mêmes numéros de référence.

On a représenté en figures 8 et 9 une lame selon un mode de réalisation de l'invention, qui peut être montée sur le porte-lame du dispositif de découpe représenté en figure 7.

On a représenté en figure 8 une perspective d'une lame 61 qui présente une extrémité tranchante 62. La lame 61 est agencée pour séparer l'ensemble d'une pièce, dont on a représenté une partie 81, et d'un supplément de pièce 82 le long d'une jonction 83 entre celles-ci. Le bord 84 de la pièce, qui inclut la jonction 83, est galbé. Il suit une portion de ligne courbe. La lame 61 présente la même courbure, ce qui permet d'obtenir une découpe selon la même ligne courbe. La lame 61 est mobile en translation avec l'arche 54.

La figure 9 est une vue partielle en élévation de la lame 61 et de son extrémité tranchante 62. L'extrémité tranchante 62 présente, dans la largeur de la lame, une forme constituée de trois segments de droite. Le segment central 87 est perpendiculaire aux bords 88 et 89 de la lame 61. Les segments 85 et 86 forment chacun un angle aigu avec respectivement les bords 88 et 89 de la lame 61. Ainsi, l'extrémité tranchante de la lame présente deux segments inclinés, ce qui permet que toute la force exercée sur la lame soit concentrée sur une ligne de contact réduite, ce qui augmente l'efficacité de la découpe. Cette forme spécifique permet également, tout au long de la descente de la lame, un guidage en contact avec la pièce à découper. La forme comprenant deux segments inclinés favorise l'effet guillotine. La lame est flexible et fine comme une lame de cutter.

La découpe obtenue est franche, sans bourrelet et sans aspérité. Au moins une face de la pièce s'étendant jusqu'au bord 84 de la pièce est visible.

L'invention n'est pas limitée aux modes de mise en oeuvre présentés et d'autres modes de mise en oeuvre apparaîtront clairement à l'homme du métier.

Il est notamment possible de fabriquer par ce procédé des pièces en d'autres matériaux polymère que ceux utilisés dans les modes de mise en oeuvre présentés.

On pourra également fabriquer d'autres pièces que des becquets comme des panneaux de porte, des capots, des hayons, des marches-pieds, etc. De plus, les becquets fabriqués selon le procédé ne sont pas limités à ceux montés sur un cadre d'ouvrant. En effet, les becquets fabriqués peuvent être fixés directement sur la caisse. De plus, les becquets fabriqués selon le procédé ne sont pas nécessairement collés. Ils peuvent être soudés.

D'autres techniques de découpe peuvent être utilisées pour séparer la pièce du supplément de pièce.

Les techniques de découpe peuvent également être combinées entre elles. Par exemple, la technique de découpe par création d'un sillon peut être effectuée sur un ensemble d'une pièce et d'un supplément de pièce formant une marche, la marche pouvant servir de guide à la lame.

Egalement, d'autres modes de mise en oeuvre peuvent être utilisés pour abaisser la température de la jonction entre la pièce et le supplément de pièce.

## Revendications

1. Procédé d'obtention d'une pièce (31) de véhicule automobile ayant au moins une face visible (35a) s'étendant jusqu'à une portion d'un bord (35) de la pièce (31), la pièce étant formée par une peau d'un matériau polymère dont l'épaisseur (e) est significativement plus petite que les autres dimensions de la peau, procédé **caractérisé en ce qu'**il comporte au moins les étapes suivantes :
- injection du matériau polymère dans un moule comprenant une empreinte en au moins deux parties contigües, à savoir une partie principale (7) destinée à former la pièce (31) et au moins une partie supplémentaire (8) destinée à former un supplément de pièce (32), la partie supplémentaire (8) s'étendant sur une longueur (M) allant de 10 à 30 mm, de préférence de 20 à 28 mm, et idéalement de 20 à 25 mm, l'épaisseur de chaque partie supplémentaire à la jonction (34) avec la partie principale (7) étant au maximum égale à l'épaisseur à la jonction (34) de la partie principale (7) et au minimum égale à l'épaisseur à la jonction de la partie principale (7) diminuée de 0,5 mm, chaque partie supplémentaire (8) étant située entre un point d'entrée du matériau polymère dans l'empreinte et la partie principale (7), et
- séparation de la pièce (31) et du supplément de pièce (32) par découpe pour former ladite portion d'un bord de la pièce,
ledit procédé comprenant les étapes suivantes :
- création d'une amorce de rupture à la jonction (34) entre la pièce (31) et le supplément de pièce (32) et abaissement de la température de la jonction (34) jusqu'à une température inférieure ou égale au point de fragilisation du matériau polymère, puis
- une fois que la jonction (34) entre la pièce (31) et le supplément de pièce (32) présente une température inférieure ou égale au point de fragilisation du matériau polymère, rupture mécanique à la jonction,
l'étape de création d'une amorce de rupture à la jonction (34) entre la pièce (31) et le supplément de pièce (32) consistant à former un angle vif (70) à la surface de la jonction (34), **caractérisé en ce que** l'angle vif (70) est formé par réalisation, à la jonction (34) entre la pièce (31) et le supplément de pièce (32), d'un sillon (37) au moyen d'une lame (36) après éjection de la pièce (31) et du supplément de pièce (32) hors du moule.

2. Procédé d'obtention selon la revendication 1, dans lequel la section transversale du sillon (37) présente un sommet ayant un rayon de courbure inférieur à 0,5 mm, idéalement inférieur à 0,05 mm.

3. Procédé d'obtention selon l'une quelconque des revendications précédentes, dans lequel la découpe est effectuée avec une tolérance de position par rapport à la jonction inférieure à 0,5 mm et la découpe obtenue est sans bourrelet et sans aspérité.

4. Procédé d'obtention selon l'une quelconque des revendications 1 et 2, dans lequel la découpe est effectuée avec une tolérance de position par rapport à la jonction inférieure ou égale à 0,1 mm et la découpe obtenue est sans bourrelet et sans aspérité.

5. Procédé d'obtention d'un ensemble d'une pièce (31) de véhicule automobile et d'un cadre porteur de la pièce (31), la pièce ayant au moins une face visible (35a) s'étendant jusqu'à un bord (35) de la pièce (31), le procédé étant **caractérisé en ce qu'**il comprend les étapes du procédé d'obtention d'une pièce de véhicule automobile selon l'une quelconque des revendications précédentes et en outre une étape d'assemblage de la peau sur le cadre porteur de la pièce (31).

## Patentansprüche

1. Verfahren zur Herstellung eines Teils (31) für ein Kraftfahrzeug, das mindestens eine sichtbare Seite (35a) aufweist, die sich bis zu einem Abschnitt eines Randes (35) des Teils (31) erstreckt, wobei das Teil von einer Verkleidung aus einem Polymermaterial gebildet ist, dessen Dicke (e) deutlich kleiner ist als die anderen Maße der Verkleidung, wobei das Verfahren **dadurch gekennzeichnet ist, dass** es mindestens die folgenden Schritte aufweist:
- Einspritzen des Polymermaterials in ein Formwerkzeug, das eine Formhöhlung aus mindestens zwei aneinander stoßenden Teilen umfasst, das heißt einem Hauptteil (7), der dazu bestimmt ist, das Teil (31) zu bilden, und mindestens einem zusätzlichen Teil (8), der dazu bestimmt ist, einen Teilzusatz (32) zu bilden, wobei der zusätzliche Teil (8) sich über eine Länge (M) erstreckt, die 10 bis 30 mm, vorzugsweise 20 bis 28 mm und idealerweise 20 bis 25 mm beträgt, wobei die Dicke jedes zusätzlichen Teils an der Verbindungsstelle (34) mit dem Hauptteil (7) höchstens gleich der Dicke an der Verbindungsstelle (34) des Hauptteils (7) und mindestens gleich der Dicke an der Verbindungsstelle des Hauptteils (7) verringert um 0,5 mm ist, wobei der zusätzliche Teil (8) sich zwischen einem Eintrittspunkt des Polymermaterials in die Formhöhlung und dem Hauptteil (7) befindet, und
- Trennen des Teils (31) und des Teilzusatzes (32) durch Schneiden, um den Abschnitt eines Randes des Teils zu bilden,
wobei das Verfahren die folgenden Schritte umfasst:
- Erzeugen eines Anrisses an der Verbindungsstelle (34) zwischen dem Teil (31) und dem Teilzusatz (32) und Absenken der Temperatur der Verbindungsstelle (34) bis auf eine Temperatur kleiner oder gleich dem Versprödungspunkt des Polymermaterials, anschließend
- sobald die Verbindungsstelle (34) zwischen dem Teil (31) und dem Teilzusatz (32) eine Temperatur kleiner oder gleich dem Versprödungspunkt des Polymermaterials aufweist, mechanisches Brechen an der Verbindungsstelle,
wobei der Schritt des Erzeugens eines Anrisses an der Verbindungsstelle (34) zwischen dem Teil (31) und dem Teilzusatz (32) darin besteht, einen spitzen Winkel (70) an der Oberfläche der Verbindungsstelle (34) zu bilden,
**dadurch gekennzeichnet**, der spitze Winkel (70), an der Verbindungsstelle (34) zwischen dem Teil (31) und dem Teilzusatz (32), durch Einbringen einer Furche (37) mittels eines Schneidmessers (36) nach Ausdrücken des Teils (31) und des Teilzusatzes (32) aus dem Formwerkzeug gebildet wird.

2. Herstellungsverfahren nach Anspruch 1, wobei der Querschnitt der Furche (37) einen Scheitel aufweist, dessen Krümmungsradius kleiner ist als 0,5 mm, idealerweise kleiner als 0,05 mm.

3. Herstellungsverfahren nach einem der vorhergehenden Ansprüche, wobei der Schnitt mit einer Positionstoleranz gegenüber der Verbindungsstelle kleiner als 0,5 mm erfolgt und der erhaltene Schnitt frei von Wülsten und frei von Unebenheiten ist.

4. Herstellungsverfahren nach einem der Ansprüche 1 und 2, wobei der Schnitt mit einer Positionstoleranz gegenüber der Verbindungsstelle kleiner oder gleich 0,1 mm erfolgt und der erhaltene Schnitt frei von Wülsten und frei von Unebenheiten ist.

5. Verfahren zur Herstellung einer Anordnung aus einem Teil (31) für ein Kraftfahrzeug und aus einem Trägerrahmen des Teils (31), wobei das Teil mindestens eine sichtbare Seite (35a) aufweist, die sich bis zu einem Rand (35) des Teils (31) erstreckt, wobei das Verfahren **dadurch gekennzeichnet ist, dass** es die Schritte des Verfahrens zur Herstellung eines Teils für ein Kraftfahrzeug nach einem der vorhergehenden Ansprüche und ferner einen Schritt des Montierens der Verkleidung an dem Trägerrahmen des Teils (31) umfasst.

## Claims

1. Method for obtaining a motor vehicle part having at least one visible surface (35a) extending up to a portion of an edge (35) of the part (31), the part being formed by a skin of a polymer material whose thickness (e) is significantly smaller than the other dimensions of the skin, method **characterised in that** it comprises at least the following steps:
- injecting the polymer material into a mould comprising a cavity in at least two contiguous sections, i.e. a main section (7) for forming the part (31) and at least one additional section (8) for forming an add-on (32) for the part, the additional section (8) extending over a length (M) ranging from 10 mm to 30 mm, preferably from 20 mm to 28 mm, and ideally from 20 mm to 25 mm, the thickness of each additional section at the junction (34) with the main section (7) being at most equal to the thickness at the junction of the main section and at least equal to the thickness at the junction (34) of the main section (7) decreased by 0.5 mm, each additional section (8) being arranged between an entry point of the polymer material into the cavity and the main section (7), and
- separating the part (31) and the add-on (32) by cutting to form said portion of an edge of the part,
- wherein the method comprises the following steps:
- creating an incipient break at the junction (34) between the part (31) and the add-on (32) and reducing the temperature of the junction (34) to a temperature less than or equal to the embrittlement point of the polymer material, then
- - once the temperature of the junction (34) between the part (31) and the add-on (32) is less than or equal to the embrittlement point of the polymer material, mechanical breakage at the junction
- wherein the step of creating an incipient break at the junction (34) between the part (31) and the add-on (32) consists in forming a sharp angle (70) at the surface of the junction (34)
- **characterised in that**
- the sharp angle (70) is formed by creating, at the junction (34) between the part (31) and the add-on (32), a groove (37) using a blade (36) after ejecting the part (31) and the add-on (32) from the mould.

2. Method for obtaining according to claim 1, wherein the cross-section of the groove (37) has a crest of radius of curvature less than 0.5 mm, ideally less than 0.05 mm.

3. Method for obtaining according to to any one of the preceding claims, wherein cutting is carried out with a position tolerance with respect to the junction of less than 0.5 mm and the cut obtained has no bead and no roughness.

4. Method for obtaining according to claim 1 or 2, wherein cutting is carried out with a position tolerance with respect to the junction of less than or equal to 0.1 mm and the cut obtained has no bead and no roughness.

5. Method for obtaining an assembly of a motor vehicle part (31) and a frame supporting the part (31), the part having at least one visible surface (35a) extending up to an edge (35) of the part (31), the method being **characterised in that** it comprises the steps of the method for obtaining a motor vehicle part according to any one of the preceding claims, and in addition a step of assembling the skin on the frame supporting the part (31).
